# EUROPÄISCHE PATENTANMELDUNG

(11) **EP 4 510 258 A1**
(43) Veröffentlichungstag der Anmeldung: **19.02.2025**
(21) Anmeldenummer: 23191804.6
(22) Anmeldetag: 16.08.2023
(51) Int. Cl.: H01M 10/04, H01M 10/44

(54) **VORRICHTUNG UND VERFAHREN ZUR FORMIERUNG VON POUCHZELLEN**

(71) Anmelder: 1. Wenz-Mechanik GmbH, 72766 Reutlingen (DE); Customcells Holding GmbH, 25524 Itzehoe (DE)
(72) Erfinder: Hirlinger, Janne, 72766 Reutlingen (DE); Kaiser, Bernd, 72127 Kusterdingen (DE)
(74) Vertreter: Christ, Niko

(57) **Zusammenfassung**

Im Stand der Technik werden Pouchzellen zur Formierung in einem Druckaufnahme eingespannt und dort unter physischem Druck mit Spannung beaufschlagt, sowie entlang der vorgesehenen Kennlinien geladen und entladen. Problematisch ist hierbei, dass der Druck auf die einzelnen Zellen je nach deren konkreter Beschaffenheit, auftretenden Unebenheiten, unterschiedlichem Ladeverhalten und dergleichen mehr unterschiedlich sein kann. Mit zu großem Druck kann hierbei eine zu große Hitze entstehen, die zur Beschädigung von Zellen während des Vorgangs führen kann.

Die vorliegende Erfindung sieht daher eine Druckbeaufschlagung mit einem Druckkolben vor, der mit einem Druckregler betrieben wird und gegen eine Druckmesseinheit drückt. Hierdurch kann gewährleistet werden, dass ein gleichmäßiger Druck auf die Zellen auch bei unterschiedlichen Eigenschaften der einzelnen Zellen und insbesondere bei Veränderungen des Drucks während des Formierungsvorgangs sichergestellt werden kann.

## Beschreibung

Die vorliegende Erfindung betrifft eine Vorrichtung zur Formierung von Pouchzellen, umfassend wenigstens einen Aktuator zur Beaufschlagung eines Plattenpakets aus einer Mehrzahl von Pressplatten, in dem zwischen jeweils zwei benachbarten Pressplatten Zellenaufnahmen zum Einbringen einer zu formierenden Pouchzelle gebildet sind, mit einem Pressdruck, sowie ein entsprechendes Verfahren.

Es sind unterschiedliche Arten von Batteriezellen bekannt, wobei prinzipiell zwischen zylindrischen Rundzellen, zumeist quaderförmigen prismatischen Zellen und so genannten Pouchzellen unterschieden wird, welche letzteren in der Art eines gefüllten Beutels beschaffen sind. Die Herstellung dieser letzteren Pouchzellen ist Gegenstand der vorliegenden Erfindung.

In einem ersten Schritt werden zur Herstellung zunächst die Materialien von Kathode und Anode in Form von homogenen Pasten gemischt und angerührt. Mit diesen Pasten werden sodann Folien beschichtet, die dann getrocknet und unter Druck verpresst, also kalandriert werden, so dass die hieraus entstehenden Elektroden die gewünschten Werte von Porosität und Schichtdicke erhalten. Im Rahmen des Stapelns und ggf. Wickelns unter Einbezug eines Separators, der einen Kurzschluss zwischen den Elektroden verhindert, entsteht die eigentliche Zelle, die abschließend mit einer Elektrolytlösung befüllt und schließlich zu einem geschlossenen Folienbeutel verschlossen wird, welcher jedoch nach außen über zwei Elektrodenanschlüsse kontaktierbar ist.

Die Formierung und die anschließende Reifung gehören zu den wichtigsten Prozessschritten in der Produktion der Pouchzellen. Während der Formierung werden die frisch hergestellten Zellen zum ersten Mal geladen und entladen. Dabei bilden sich wichtige Grenzschichten zwischen den Elektrolyten und den Aktivmaterialien. Ihre Beschaffenheiten nehmen wesentlichen Einfluss auf die Leistungsfähigkeit und das Alterungsverhalten der Zellen.

Während der Formierung werden die Zellen in eine Vorrichtung, einen so genannten Pressure Tray bzw. ein Plattenpaket gepackt und durch physischen Druck gepresst. Die Elektrodenanschlüsse der Pouchzellen werden kontaktiert und eine leitfähige Verbindung mit einer Ladeelektronik hergestellt. Die gesamte Anordnung wird in einem abgeschlossenen Raum mittels Luft gekühlt und geheizt und die Ladezyklen und Entladezyklen abgearbeitet. Nach dem Erreichen eines Endzustands wird die Verspannung der Pouchzellen aus dem Plattenpaket gelöst und die Zellen werden entnommen.

Aus diesem bekannten Vorgehen ergeben sich einige Nachteile. Zunächst ist der Aufwand zur Bestückung sehr hoch und bedarf zahlreicher manueller Prozesse. Zudem ist die mechanische Verspannung der Zellen vorab festgelegt und kann während des Prozesses nicht verändert werden. Es kann jedoch sein, dass die Zellen während der Formierung anschwellen, so dass von dem gewünschten Druck abgewichen wird und die Qualität der Zelle sich verschlechtert. Dies kann auch auf bereits geringe Unebenheiten der Pouchzelle zurückzuführen sein.

Ferner kann die Pouchzelle bei dem bekannten Vorgehen auch nicht im Notfall aus dem Plattenpaket entfernt werden, da hierfür zunächst ein Herausnehmen des Plattenpakets aus der geschlossenen Umgebung, ein Lösen der Verspannung und ein Abklemmen der Elektroden erfolgen muss.

Vor diesem Hintergrund liegt der vorliegenden Erfindung die Aufgabe zugrunde, eine Vorrichtung und ein Verfahren zur Formierung von Pouchzellen zu schaffen, welche ein einfaches Bestücken und Entnehmen der Zellen ermöglicht und Beschädigungen an den Pouchzellen aufgrund zu hohen Drucks vermeidet.

Dies löst eine Vorrichtung zur Formierung von Pouchzellen gemäß den Merkmalen des unabhängigen Anspruchs 1, sowie ein entsprechendes Verfahren gemäß den Merkmalen des unabhängigen Anspruchs 14. Sinnvolle Weiterbildungen sowohl der Vorrichtung als auch des Verfahrens können den sich jeweils anschließenden abhängigen Ansprüchen entnommen werden.

Insoweit vorgesehen ist eine Vorrichtung zur Formierung von Pouchzellen, umfassend wenigstens einen Aktuator zur Beaufschlagung eines Plattenpakets aus einer Mehrzahl von Pressplatten, in dem zwischen jeweils zwei benachbarten Pressplatten Zellenaufnahmen zum Einbringen einer zu formierenden Pouchzelle gebildet sind, mit einem Pressdruck. Eine solche Vorrichtung ist erfindungsgemäß dadurch gekennzeichnet, dass der wenigstens eine Aktuator ein mithilfe eines Druckreglers zur Vergleichmäßigung des Pressdrucks geregelter Druckkolben ist, welcher in Richtung einer mit dem Druckregler signalverbundenen Druckmesseinheit unter Zwischenlage des Plattenpakets ausrückbar ist.

Aufgrund der Regelung des Druckkolbens über einen Druckregler, vorzugsweise einen Proportionaldruckregler, wird sichergestellt, dass auf das Plattenpaket als ganzes, und somit auch auf die einzelnen Platten, der erforderliche Gesamtdruck ausgeübt wird. Hierbei kann es sinnvollerweise vorgesehen sein, dass die Pressplatten des Plattenpakets auf den Stangen eines Käfigs aufgefädelt und in diesem entlang des Käfigs verschiebbar sind. Hierdurch verteilt sich der von außen angelegte Druck gleichmäßig auf die zwischen den Pressplatten aufgenommenen Pouchzellen.

Ein solcher Druckkolben kann mit einigem Vorteil pneumatisch oder hydraulisch betrieben sein. Insbesondere ist es hierbei möglich, ohne zusätzliche Energie den Druck weitgehend aufrecht zu erhalten und damit eine energieeffiziente Produktion zu ermöglichen.

Weiter kann vorgesehen sein, dass die Lagerung der Pressplatten über Gelenkgleitlager, vorzugsweise über vier Gelenkgleitlager im Bereich von vier Ecken der Pressplatten, erfolgt. Derartige Gelenkgleitlager sind im Wesentlichen in die Pressplatten eingearbeitete und formschlüssig gelagerte Kugeln, welche eine durchgehende gerade Öffnung aufweisen. Durch diese Öffnungen können die Stangen des Käfigs des Plattenpakets oder sonstige Führungsstangen hindurchgeführt sein. Aufgrund der kugelförmigen Aufnahme des Gelenkgleitlagers in einer Gelenkschale mit kugelförmiger Innenkontur bleibt die betroffene Pressplatte auch im Fall eines einseitigen Ausdehnens einer Pouchzelle und damit einer Verkantung der Pressplatte noch beweglich und kann den Druck des Druckkolbens weiterleiten.

Im Hinblick auf das konkrete Vorgehen während des Formierens ist vorgesehen, dass die Pouchzellen zunächst zwischen jeweils zwei Pressplatten eines Plattenpakets in eine Zellenaufnahme eingeführt werden, dann vermittels wenigstens eines Aktuators gegenüber dem Plattenpaket ein Pressdruck angelegt und im weiteren Verfahren an Kontakte der Pouchzelle eine veränderliche Spannung angelegt wird. Ein solches Verfahren ist erfindungsgemäß dadurch gekennzeichnet, dass der wenigstens eine Aktuator ein Druckkolben ist, welcher zur Druckbeaufschlagung auf das Plattenpaket in Richtung einer Druckmesseinheit ausgerückt wird und mithilfe eines Druckreglers einen gleichbleibenden Druck ausübt.

Im Fall eines Anschwellens einer Pouchzelle wird sich der Druck erhöhen, was im Rahmen der Regelung des Druckreglers weitgehend ausgeglichen werden kann. Steigt der Druck jedoch dennoch an, kann es sinnvollerweise vorgesehen sein, dass im Fall eines zu hohen Drucks an der Druckmesseinheit zunächst die Spannung verändert oder abgeschaltet wird, dann bedarfsweise der Pressdruck des Druckkolbens gesenkt oder eine Verspannung des Plattenpakets geöffnet wird und dann bedarfsweise wenigstens eine betroffene Pouchzelle aus der Zellenaufnahme entnommen oder ausgeworfen wird.

Häufig reicht es bereits aus, die Spannung von der Pouchzelle wegzunehmen, um ein weiteres Anschwellen zu verhindern, soweit dies nicht der Fall ist kann eine Wegnahme von Druck, also ein Absenken des Druckniveaus unter den für die Regelung vorgesehenen Wert, für eine Normalisierung sorgen. Erst wenn auch dies nicht zu dem gewünschten Ziel sorgt, kann es erforderlich werden, entweder nur die betroffene oder sogar alle Pouchzellen aus dem Plattenpaket zu entnehmen, also auszuwerfen oder herauszunehmen.

In konkreter Ausgestaltung kann das Einsetzen und/oder das Entnehmen der Pouchzelle in die oder aus der Zellenaufnahme über einen Roboter, vorzugsweise einen Portalroboter, erfolgen. Eine solche Automatisierung ermöglicht zum Einen eine schnellere und weniger aufwändige Bestückung der Plattenpakete, zum Anderen ermöglicht dies auch eine Entnahme in einer Situation, in der die Umgebungsbedingungen aufgrund austretender Gase, hoher Temperaturen und dergleichen mehr für einen manuellen Eingriff nicht mehr geeignet sind.

Konkret kann in diesem Zusammenhang vorgesehen sein, dass die Zellenaufnahmen im Wesentlichen horizontal ein- und ausführbare Einführhilfen aufweisen, welche zwischen zwei benachbarten Kontaktseiten aufgenommen sind und jeweils wenigstens eine Aufnahme zum Einsetzen einer Pouchzelle aufweisen. Durch ein Herausziehen der Einführhilfen, welche beispielsweise in der Art eines Auszugs oder einer flachen Schublade ausgeführt sein können, kann auch bei ansonsten noch zusammengefügtem Plattenpaket eine Bestückung des Plattenpakets und eine Entnahme der Pouchzellen erfolgen. Die Kontaktseiten können dabei zumindest abschnittsweise mit einer Elastomerfläche überzogen werden oder Elastomerelemente enthalten. Hierdurch ist es möglich, bei unebenen Zellen eine höhere Homogenität bei der Verpressung zu erreichen sowie die Gefahr eines internen Kurzschlusses deutlich zu senken.

In eine solche Einführhilfe kann eine Pouchzelle dann manuell oder über einen Roboter eingesetzt und mit der Einführhilfe zusammen im Wesentlichen horizontal in die Zellenaufnahme eingefahren werden. Auch das horizontale Einfahren bringt einen entscheidenden Vorteil, nämlich dass in einem gemeinsamen Gehäuse mehrere Plattenpakete angeordnet sein können und diese ohne eine Herausnahme aus dem Gehäuse bestückt und geleert werden können. Dies erspart erhebliche Zeit und Mühe, die ansonsten in die Handhabung der Plattenpakete investiert werden müsste.

Im Hinblick auf die konkrete Ausgestaltung der einzelnen Pressplatten kann vorgesehen sein, dass äußere Pressplatten des Plattenpakets einseitig eine Kontaktseite zur Kontaktierung der Pouchzelle und zwischen den äußeren Pressplatten liegende innere Pressplatten beidseitig solche Kontaktseiten aufweisen. Äußere Pressplatten befinden sich folglich endständig in dem jeweiligen Plattenpaket und kontaktieren einseitig entweder den Druckkolben oder die Druckmesseinheit. Die dazwischen liegenden Pressplatten werden als innere Pressplatten bezeichnet. Hierbei kann es vorgesehen sein, dass die inneren Pressplatten aus zwei spiegelverkehrten oder identischen Plattenhälften hergestellt sind. Soweit die Pressplatten in sich spiegelsymmetrisch gebildet sind, können identische Plattenhälften eingesetzt werden, ansonsten treffen Pressplatten spiegelverkehrt aufeinander.

Bevorzugtermaßen kann es vorgesehen sein, dass jede Pressplatte im Bereich ihrer Kontaktseiten wenigstens eine Temperierschleife aufweist, welche in wärmeleitendem Kontakt mit der Kontaktseite der Pressplatte, vorzugsweise mäanderförmig, verlegt ist und vorzugsweise aus einem Kupferrohr zur Durchleitung eines, vorzugsweise flüssigen, Temperiermittels hergestellt ist. Zunächst ist es von Vorteil, wenn anstelle eines Gases, wie etwa Luft, eine Flüssigkeit als Temperiermittel eingesetzt wird. Flüssigkeiten haben eine größere Wärmekapazität als Gase und können daher effizienter die Wärme an die Pouchzellen hinleiten oder von diesen wegleiten.

Die Nutzung einer vorzugsweise mäanderförmigen Temperierschleife sorgt dafür, dass das Temperiermittel lange mit der Pouchzelle in wärmeleitendem Kontakt bleibt, bevor es wieder abgeleitet wird. Die Temperierschleife wird dazu in der Pressplatte versenkt, also so integriert, dass sie die Kontaktseite wärmeleitend kontaktiert, aber diese nicht überragt, so dass eine innige Kontaktierung der Kontaktseite mit der Pouchzelle nicht gestört wird.

In konkreter Weiterbildung kann es vorgesehen sein, dass jede Pressplatte im Bereich jeder ihrer Kontaktseiten einen Temperatursensor aufweist, welcher die Temperatur an oder im Bereich einer Oberfläche der jeweiligen Kontaktseite erfasst und mit einem Temperaturregler signalverbunden ist, welcher die Temperatur des über die Temperierschleife zuströmenden Temperiermittels beeinflusst. Auch hier kann somit eine Regelung aufgebaut werden, welche durch die Mischung von wärmerem und kälterem Temperiermittel einen vorgegebenen Wert der Prozesstemperatur an der Pouchzelle einstellt. Durch die zentrale Temperaturerfassung im Bereich der Kontaktseite, und vorzugsweise mehr noch im Bereich von deren geometrischen Mittelpunkt, kann die Temperatur möglichst dicht an der Pouchzelle erfasst werden.

Mit besonderem Vorteil kann es weiter vorgesehen sein, dass zumindest jede innere Pressplatte an wenigstens einer ihrer Kontaktseiten wenigstens eine Kontaktierplatine zur elektrischen Kontaktierung der Anschlüsse einer einzulegenden Pouchzelle aufweist, welche in der jeweiligen Pressplatte zumindest flächenbündig in eine Aufnahmevertiefung einrückbar und in Richtung der innerhalb derselben Zellenaufnahme benachbarten Pressplatte, jedoch unter Zwischenlage der Pouchzelle, ausrückbar ist. Durch ein reines Herandrücken der Kontaktierplatine kann bereits ein ausreichender elektrischer Kontakt mit den Elektroden der Pouchzelle hergestellt werden. Im Gegensatz zu einer Kontaktierung im Stand der Technik kann diese Kontaktierung jedoch durch ein Zurückziehen der Kontaktierplatine wieder gelöst werden, da die Kontaktierung nur durch Klemmen erfolgt. Hierfür ist es ausreichend, wenn eine Kontaktierplatine je Zellenaufnahme an nur einer Stelle vorgesehen ist, um aber eine Bestückung auch spiegelverkehrt zu erlauben und um eine möglichst sichere Kontaktierung zu ermöglichen, kann vorgesehen sein, dass Kontaktierplatinen sowohl an beiden um die Zellenaufnahme herum benachbarten Pressplatten, als auch auf beiden Seiten der Pouchzelle vorgesehen ist.

Hierbei kann in einer konkreten Ausgestaltung vorgesehen sein, dass die Kontaktierplatinen jeweils einer druckbetätigten Kontaktdruckplatte zugeordnet sind. Dies ermöglicht ein einfaches Ausrücken der Kontaktierplatinen, die in einem Ruhezustand vollständig und wenigstens flächenbündig in die Pressplatte eingerückt sind, so dass kein Überstand gegeben ist, der ein Einführen der Pouchzelle behindert. Die Betätigung kann sodann dergestalt umgesetzt sein, dass einander in derselben Pressplatte gegenüberliegend zugeordneten Kontaktdruckplatten miteinander verbundene Vakuumkammern zur Druckbetätigung zugeordnet sind, wobei vorzugsweise eine der Vakuumkammern unmittelbar und die andere mittelbar mit einer Druckluftzufuhr verbunden ist. Über eine Druckluftzufuhr können diese Vakuumkammern dann mit Druckluft befüllt werden, so dass die Kontaktdruckplatten aus einer für sie vorgesehenen Ausnehmung durch die Kontaktseite der Pressplatte hindurch vorgeschoben werden, wobei umgekehrt durch einen Unterdruck auch ein Einrücken der Kontaktdruckplatten und damit ein Freigeben der zuvor gehaltenen Pouchzelle erfolgen kann. Soweit einer Kontaktdruckplatte keine Kontaktierplatine zugeordnet ist, kann diese dennoch vorhanden sein, um eine mechanische Halterung der Pouchzelle zu verbessern.

In einer konkreten Ausgestaltung der Gesamtvorrichtung kann es vorgesehen sein, dass mehrere Plattenpakete mit zugehörigen Aktuatoren gemeinsam in einem Gehäuse aufgenommen sind. Ein solches Gehäuse umfasst die Plattenpakete und ermöglicht es, eine Absaugung entstehender Prozessgase aus einer um die Plattenpakete herum geschlossenen Kammer unter Anlegen eines Unterdrucks vorzunehmen, so dass etwa austretende Gase nicht von Bedienungspersonal eingeatmet werden und sich auch nicht mit Luftsauerstoff oder anderen vorhandenen Gasen ein explosibles Gemisch bilden.

Die vorstehend beschriebene Erfindung wird im Folgenden anhand eines Ausführungsbeispiels näher erläutert.

Es zeigen
- Figur 1: ein schrankförmiges Gehäuse mit zwei Plattenpaketen zur Formierung von Pouchzellen in einer seitlichen Querschnittsdarstellung,
- Figur 2: ein Plattenpaket mit zugehörigem Druckkolben in einer schematischen Längsdarstellung,
- Figur 3: eine Pressplatte des Plattenpakets gemäß Figur 2 in einer Draufsicht auf eine Kontaktseite,
- Figur 4: die Pressplatte gemäß Figur 3 in einer Schnittdarstellung parallel zu der Kontaktseite,
- Figur 5: ein Detail der Pressplatte gemäß Figur 3 in Form einer Schnittdarstellung durch eine Vakuumkammer, sowie
- Figur 6: eine Einführhilfe zum Einführen in eine Zellenaufnahme mit einer eingelegten Pouchzelle in einer seitlichen Draufsicht.

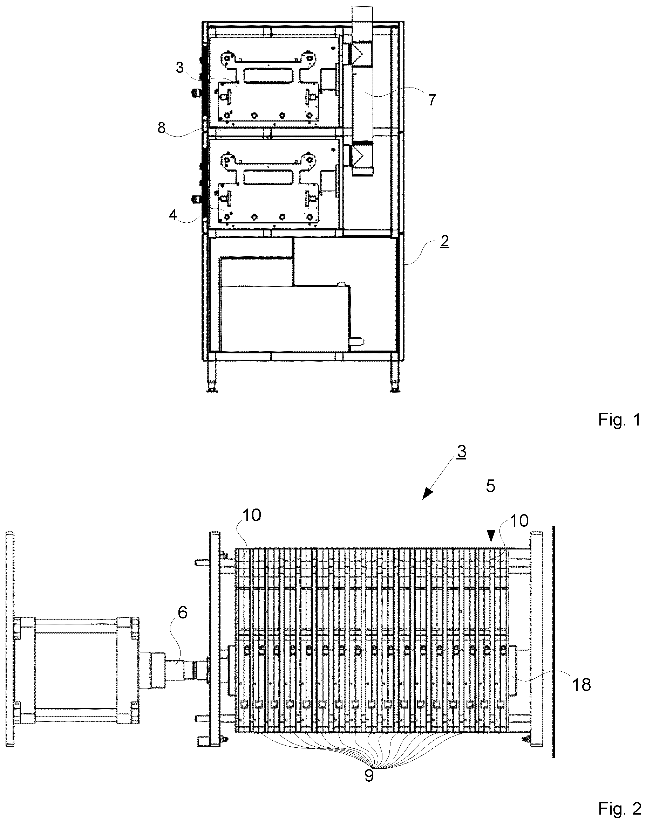

Figur 1 zeigt ein schrankförmiges Gehäuse 2, in welchem übereinander zwei Kammern angeordnet sind. In den Kammern befindet sich jeweils ein Pressure Tray, also in der oberen Kammer ein erstes Plattenpaket 3 und in der unteren Kammer ein zweites Plattenpaket 4, jeweils mit einem dazugehörigen pneumatischen Druckkolben 6, der eine Verpressung jeweils eines der Plattenpakete 3 und 4 mit darin eingesetzten Pouchzellen 1 ausführt. Der Druckkolben 6 weist hierzu einen Zylinder auf, dessen Druck durch einen Proportionaldruckregler geregelt wird. Es wird hierdurch für einen konstanten Druck am Zylinder und damit für eine konstante Kraft an den Plattenpaketen 3 und 4 gesorgt. Überprüft wird die anliegende Kraft über eine Druckmesseinheit 18, eine an sich bekannte Druckmessdose, die nach der letzten Pressplatte 10 eines Plattenpakets 3 oder 4 angeordnet ist. Um eine Kapselung der Produktionsprozesse in den Plattenpaketen 3 und 4 zu erreichen, sind diese auch mit einer thermischen Isolierung 8 voneinander getrennt, die es erlaubt, die Umgebungstemperatur genau an die Bedürfnisse des jeweiligen Prozesses anzupassen und die Prozesse auch versetzt zueinander ablaufen zu lassen. Mithilfe einer Absaugung 7 können entstehende Prozessgase abgesaugt werden, um zu verhindern, dass explosible Gemische entstehen und gesundheitsschädliche Gase von Mitarbeitern im Prozess eingeatmet werden.

Ein großer Vorteil des Aufbaus ist die Verpressung mit einem pneumatischen Druckzylinder 6, welcher über einen Proportionaldruckregler geregelt wird. Damit ist gewährleistet, dass der Druck und somit die Kraft immer identisch bleiben. Bei einem Anschwellen der Pouchzelle 1, dem sogenannten Swelling, kann die Kraft nachgeregelt werden und es besteht keine Gefahr eines Defektes wegen zu hohen Drucks. Eine weitere Verbesserung bietet ein optionales Öffnen der Verspannung, um im Notfall, im Fall eines Thermal Runaway, also der Überhitzung der Pouchzellen 1 durch einen sich selbst verstärkenden, wärmeerzeugenden Prozess, den Druck und damit die Energie aus den Pouchzellen 1 zu nehmen. Als weitere Prüfinstanz einen Schritt zuvor wäre das Abschalten des Ladevorgangs durch die Ladeelektronik möglich. Diese kann rechtzeitig verschiedene Parameter, wie Temperatur, Innenwiderstand und dergleichen mehr, überprüfen und entsprechend reagieren. Sollten diese beiden Maßnahmen nicht den gewünschten Effekt erzielen, kann die jeweilige Pouchzelle 1 durch Einfahren einer Kontaktierung per Roboter aus dem Plattenpaket 3, 4 geholt, je nach verwendeter Mechanik auch ausgeworfen werden.

Ein solches Plattenpaket 3 mit einem zugehörigen Druckkolben 6 ist in der Figur 2 isoliert dargestellt. Das Plattenpaket 3 selbst besteht aus inneren Pressplatten 9 und randständigen äußeren Pressplatten 10. Die von dem Druckkolben 6 am weitesten entfernte äußere Pressplatte 10 kontaktiert eine Druckmesseinheit 18, welche Teil eines den Druckkolben 6 regelnden Regelkreises mit einem Proportionaldruckregler ist. Hierdurch kann der Druck des Druckkolbens 6 auch bei auftretendem Swelling in dem vorgegebenen Maß gehalten werden.

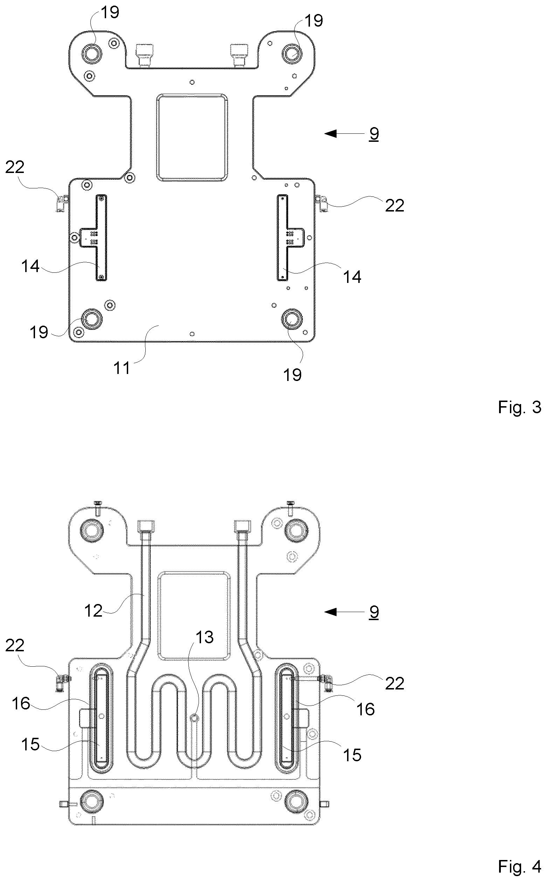

Während die äußeren Pressplatten 10 lediglich auf einer Seite eine Kontaktseite 11 aufweisen, an welcher im Betrieb eine Pouchzelle 1 anliegt, haben die inneren Pressplatten 9 solche Kontaktseiten 11 auf beiden Plattenseiten. Zwischen jeweils zwei Pressplatten 9 oder 10 ist eine Zellenaufnahme 5 freigehalten, in welche die zu formierenden Pouchzellen eingebracht werden können. Der Aufbau der Pressplatten 9, 10 ist am Beispiel der inneren Pressplatten 9 in den Figuren 3 und 4 dargestellt.

Die Führung der Verpressung erfolgt über Gelenkgleitlager 19. Diese ermöglichen es, die Unebenheiten der Zellen in allen Achsen auszugleichen. Dies führt zu einem stabileren Prozess und vermindert das Risiko von Notfällen. Die Gelenkgleitlager 19 sind in allen vier Ecken der Pressplatte 9 angeordnet und umfassen eine in einer Kugelschale gelagerte Gelenkkugel, welche von einer Längsführung in Form einer zylindrischen Bohrung durchgriffen ist. Der Käfig des Plattenpakets 3 ist durch diese Bohrungen geführt, so dass auch bei einer Schräglage der Pressplatte 9 diese noch leicht geführt werden kann.

Anstatt einer Temperierung durch Luft, wie im Stand der Technik bekannt, wird vorliegend eine Flüssigkeit, etwa Wasser, verwendet. Dies speichert Energie deutlich besser als Luft und spart damit Energie. Innerhalb der Pressplatte 9, die als Doppelplatte aus zwei identischen, miteinander verschraubten Plattenhälften ausgeführt ist, verläuft eine Temperierschleife 12 in Form eines Kupferrohrs mäanderförmig, an das ein Temperiergerät angeschlossen werden kann. Durch die Temperierschleife 12 wird beheiztes oder gekühltes Wasser gepumpt und damit die Prozesstemperatur reguliert. Die Prozesstemperatur kann über einen integrierten Temperatursensor 13, etwa einen NTC (Negative Temperature Coefficient)-Thermistor in der Mitte einer auf der Kontaktseite 11 der Pressplatte 9 gebildeten Zellauflage überprüft werden.

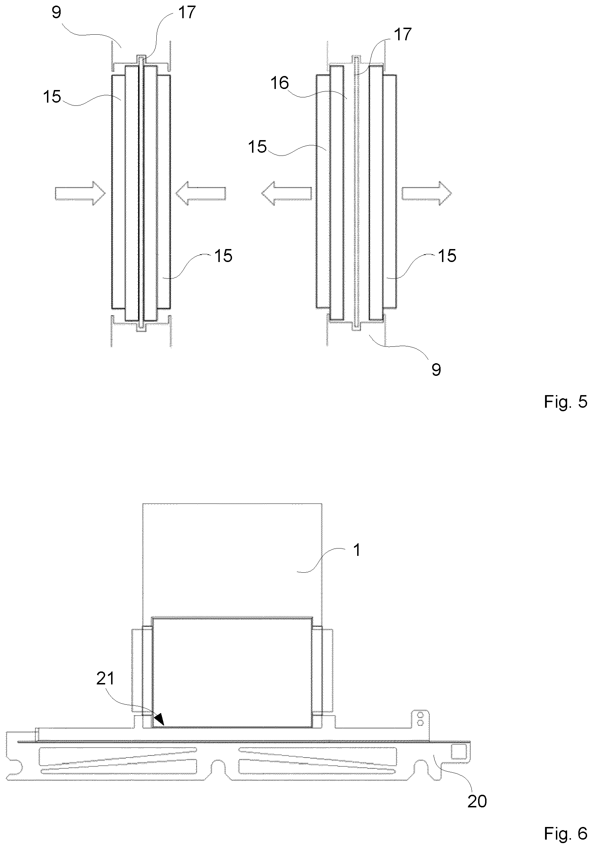

Eine Hauptfunktion der Pressplatten 9 und 10 ist die Kontaktierung mit der Pouchzelle 1. Hierfür sind ein- und ausfahrbare Kontaktierplatinen 14 verbaut. Die Kontaktierplatinen 14 werden auf Kontaktdruckplatten 15 geschraubt, mit denen ein Ein- und Ausrücken der Kontaktierplatinen 14 wie in Figur 5 gezeigt, erfolgt. Eine Besonderheit ist, dass die Kontaktdruckplatten 15 mit den Kontaktierplatinen 14 im eingefahrenen Zustand vollständig versenkt sind, wie aus der linken Darstellung in Figur 5 hervorgeht. Die Kontaktdruckplatten 15 werden mit Druckluft ausgefahren, die über eine Druckluftzufuhr 22 wie in Figuren 3 und 4 herangeführt wird. Diese führt in eine der beiden dargestellten Vakuumkammern 16. Die beiden dargestellten Vakuumkammern 16 sind über eine Vakuumplatte 17 miteinander verbunden, welche wenigstens eine Durchgangsöffnung aufweist, über welche benachbarte Vakuumkammern 16 ihren Druck gegenseitig ausgleichen, mithin die Luft an die jeweils andere Vakuumkammer 16 ausgleichen, so dass bei einer Befüllung oder Evakuierung der einen Vakuumkammer 16 immer auch die andere sich gleich verhält. Die Vakuumplatte 17 dient gleichzeitig als Anschlag für die Kontaktdruckplatten 15. Diese werden eingefahren, indem ein Vakuum erzeugt wird, wie in der Figur 5 gezeigt ist. Die Kontaktdruckplatten 15 sind dabei umlaufend mit einem O-Ring versehen und dichten die Vakuumkammern auf diese Weise ab. Das Vakuum kann etwa über eine Venturidüse erzeugt werden.

Die zu formierende Pouchzelle 1 wird mittels einer in Figur 6 gezeigten Einführhilfe 20 zwischen die Pressplatten 9 und 10 von vorne horizontal eingeführt und liegt dabei auf einem unteren Teil der als Einschub hergerichteten Einführhilfe 20 auf, welcher dazu eine Aufnahme 21 bildet. Wichtig ist dabei, dass die angrenzenden Kontaktierplatinen 14 vollständig versenkt sind, damit die Einführhilfe 20 mit der Pouchzelle 1 bis zum Anschlag eingeschoben werden kann. In der automatisierten Produktion kann diese Zuführung durch einen Roboter oder einen Portalroboter erfolgen. Die Pressplatten 9 und 10 sind in ihrer Form so ausgebildet, dass bei der Einführung der Pouchzelle 1 in die Zellenaufnahme 5 keine Teile überstehen. Die Pouchzelle 1 kann somit beschädigungsfrei von vorne in die Zellenaufnahme 5 eingeführt und auch wieder von dort entnommen werden.

Vorstehend beschrieben sind somit eine Vorrichtung und ein Verfahren zur Formierung von Pouchzellen, welche ein einfaches Bestücken und Entnehmen der Zellen ermöglicht und Beschädigungen an den Pouchzellen aufgrund zu hohen Drucks vermeidet.

### BEZUGSZEICHENLISTE

- 1: Pouchzelle
- 2: Gehäuse
- 3: erstes Plattenpaket
- 4: zweites Plattenpaket
- 5: Zellenaufnahme
- 6: Druckkolben
- 7: Absaugung
- 8: Isolierung
- 9: innere Pressplatte
- 10: äußere Pressplatte
- 11: Kontaktseite
- 12: Temperierschleife
- 13: Temperatursensor
- 14: Kontaktierplatine
- 15: Kontaktdruckplatte
- 16: Vakuumkammer
- 17: Vakuumplatte
- 18: Druckmesseinheit
- 19: Gelenkgleitlager
- 20: Einführhilfe
- 21: Aufnahme
- 22: Druckluftzufuhr

## Patentansprüche

1. Vorrichtung zur Formierung von Pouchzellen (1), umfassend wenigstens einen Aktuator zur Beaufschlagung eines Plattenpakets (3, 4) aus einer Mehrzahl von Pressplatten (9, 10), in dem zwischen jeweils zwei benachbarten Pressplatten (9, 10) Zellenaufnahmen (5) zum Einbringen einer zu formierenden Pouchzelle (1) gebildet sind, mit einem Pressdruck,
**dadurch gekennzeichnet, dass** der wenigstens eine Aktuator ein mithilfe eines Druckreglers zur Vergleichmäßigung des Pressdrucks geregelter Druckkolben (6) ist, welcher in Richtung einer mit dem Druckregler signalverbundenen Druckmesseinheit (18) unter Zwischenlage des Plattenpakets (3, 4) ausrückbar ist.

2. Vorrichtung gemäß Anspruch 1, **dadurch gekennzeichnet, dass** der Druckkolben (6) pneumatisch oder hydraulisch betrieben ist.

3. Vorrichtung gemäß einem der Ansprüche 1 oder 2, **dadurch gekennzeichnet, dass** die Lagerung der Pressplatten (9, 10) über Gelenkgleitlager (19), vorzugsweise über vier Gelenkgleitlager (19) im Bereich von vier Ecken der Pressplatten (9, 10), erfolgt.

4. Vorrichtung gemäß einem der vorhergehenden Ansprüche, **dadurch gekennzeichnet, dass** die Zellenaufnahmen (5) im Wesentlichen horizontal ein- und ausführbare Einführhilfen (20) aufweisen, welche zwischen Kontaktseiten (11) zweier benachbarter Pressplatten (9, 10) aufgenommen sind und jeweils wenigstens eine Aufnahme (21) zum Einsetzen einer Pouchzelle (1) aufweisen.

5. Vorrichtung gemäß einem der vorhergehenden Ansprüche, **dadurch gekennzeichnet, dass** äußere Pressplatten (10) des Plattenpakets (3, 4) einseitig eine Kontaktseite (11) zur Kontaktierung einer Pouchzelle (1) und zwischen den äußeren Pressplatten (10) liegende innere Pressplatten (9) beidseitig solche Kontaktseiten (11) aufweisen.

6. Vorrichtung gemäß Anspruch 5, **dadurch gekennzeichnet, dass** die inneren Pressplatten (9) aus zwei spiegelverkehrten oder identischen Plattenhälften hergestellt sind.

7. Vorrichtung gemäß einem der vorhergehenden Ansprüche 5 oder 6, **dadurch gekennzeichnet, dass** jede Pressplatte (9, 10) im Bereich ihrer Kontaktseiten (11) wenigstens eine Temperierschleife (12) aufweist, welche in wärmeleitendem Kontakt mit der Kontaktseite (11) der Pressplatte (9, 10), vorzugsweise mäanderförmig, verlegt ist und vorzugsweise aus einem Kupferrohr zur Durchleitung eines, vorzugsweise flüssigen, Temperiermittels hergestellt ist.

8. Vorrichtung gemäß Anspruch 7, **dadurch gekennzeichnet, dass** jede Pressplatte (9, 10) an jeder ihrer Kontaktseiten (11) einen Temperatursensor (13) aufweist, welcher die Temperatur an oder im Bereich einer Oberfläche der jeweiligen Kontaktseite (11) erfasst und mit einem Temperaturregler signalverbunden ist, welcher die Temperatur des über die Temperierschleife (12) zuströmenden Temperiermittels beeinflusst.

9. Vorrichtung gemäß einem der Ansprüche 5 bis 8, **dadurch gekennzeichnet, dass** zumindest jede innere Pressplatte (9) an wenigstens einer ihrer Kontaktseiten (11) wenigstens eine Kontaktierplatine (14) zur elektrischen Kontaktierung der Anschlüsse einer einzulegenden Pouchzelle (1) aufweist, welche in der jeweiligen Pressplatte (9) zumindest flächenbündig in eine Aufnahmevertiefung einrückbar und in Richtung einer innerhalb derselben Zellenaufnahme (5) benachbarten Pressplatte (9), jedoch unter Zwischenlage der Pouchzelle (1), ausrückbar ist.

10. Vorrichtung gemäß Anspruch 9, **dadurch gekennzeichnet, dass** die Kontaktierplatinen (14) jeweils einer druckbetätigten Kontaktdruckplatte (15) zugeordnet sind.

11. Vorrichtung gemäß Anspruch 10, **dadurch gekennzeichnet, dass** einander in derselben Pressplatte (9, 10) gegenüberliegend zugeordneten Kontaktdruckplatten (15) miteinander verbundene Vakuumkammern (16) zur Druckbetätigung zugeordnet sind, wobei vorzugsweise eine der Vakuumkammern (16) unmittelbar und die andere Vakuumkammer (16) mittelbar mit einer Druckluftzufuhr (22) verbunden ist.

12. Vorrichtung gemäß einem der vorhergehenden Ansprüche, **dadurch gekennzeichnet, dass** mehrere Plattenpakete (3, 4) mit zugehörigen Aktuatoren gemeinsam in einem Gehäuse (2) aufgenommen sind.

13. Vorrichtung gemäß Anspruch 12, **dadurch gekennzeichnet, dass** in dem Gehäuse (2) vermittels einer Absaugung (7) ein Unterdruck zur Vermeidung eines Entweichens von Produktionsgasen und des Entstehens entzündlicher Gasgemische angelegt ist.

14. Verfahren zur Formierung von Pouchzellen (1), wobei die Pouchzellen (1) zunächst zwischen jeweils zwei Pressplatten (9, 10) eines Plattenpakets (3, 4) in eine Zellenaufnahme (5) eingeführt werden, dann vermittels wenigstens eines Aktuators gegenüber dem Plattenpaket (3, 4) ein Pressdruck angelegt und im weiteren Verfahren an Kontakte der Pouchzelle (1) eine veränderliche Spannung angelegt wird,
**dadurch gekennzeichnet, dass** der wenigstens eine Aktuator ein Druckkolben (6) ist, welcher zur Druckbeaufschlagung auf das Plattenpaket (3, 4) in Richtung einer Druckmesseinheit (18) ausgerückt wird und mithilfe eines Druckreglers einen gleichbleibenden Pressdruck ausübt.

15. Verfahren gemäß Anspruch 14, **dadurch gekennzeichnet, dass** im Fall eines zu hohen Drucks an der Druckmesseinheit (18) zunächst die Spannung verändert oder abgeschaltet wird, dann bedarfsweise der Pressdruck des Druckkolbens (6) gesenkt oder eine Verspannung des Plattenpakets (3, 4) geöffnet wird und dann bedarfsweise wenigstens eine betroffene Pouchzelle (1) aus der Zellenaufnahme (5) entnommen oder ausgeworfen wird.

16. Verfahren gemäß einem der Ansprüche 14 oder 15, **dadurch gekennzeichnet, dass** das Einsetzen und/oder das Entnehmen der Pouchzelle (1) in die oder aus der Zellenaufnahme (5) über einen Roboter, vorzugsweise einen Portalroboter, erfolgt.

17. Verfahren gemäß Anspruch 16, **dadurch gekennzeichnet, dass** die Pouchzelle (1) in eine Einführhilfe (20) eingesetzt und diese im Wesentlichen horizontal in die Zellenaufnahme (5) eingefahren wird.

18. Verfahren gemäß einem der Ansprüche 14 bis 17, **dadurch gekennzeichnet, dass** die Spannung über wenigstens eine Kontaktierplatine (14) an die Pouchzelle (1) angelegt wird.

19. Verfahren gemäß Anspruch 18, **dadurch gekennzeichnet, dass** die wenigstens eine Kontaktierplatine (14) an wenigstens einer Kontaktdruckplatte (15) befestigt ist, welche druckbetätigt in die Pressplatte (9, 10) ein- und ausgerückt wird.

20. Verfahren gemäß Anspruch 19, **dadurch gekennzeichnet, dass** die Kontaktdruckplatte (15) zum Auswerfen oder Entnehmen einer Pouchzelle (1) vollständig, vorzugsweise zumindest flächenbündig, in die Pressplatte (9, 10) eingerückt wird.
